# EUROPÄISCHE PATENTSCHRIFT

(11) **EP 0 745 413 B1**
(45) Veröffentlichungstag und Bekanntmachung des Hinweises auf die Patenterteilung: **10.11.1999**
(21) Anmeldenummer: 95120338.9
(22) Anmeldetag: 21.12.1995
(51) Int. Cl.: B01D 27/08, F02M 37/22

(54) **Flüssigkeitsfilter**
Liquid filter
Filtre de liquide

(30) Priorität: 31.05.1995 DE 19519892
(43) Veröffentlichungstag der Anmeldung: 04.12.1996
(73) Patentinhaber: ROBERT BOSCH GMBH, 70442 Stuttgart (DE)
(72) Erfinder: Projahn, Ulrich, Dr. Dipl.-Ing., E-28109 El Soto (Madrid) (ES); Lucas, Bernhard, Dipl.-Ing., E-28034 Madrid (ES)

(56) Entgegenhaltungen:
- EP-A- 0 607 563
- DE-A- 2 328 936
- US-A- 4 844 793
- US-A- 5 427 609

## Beschreibung

Die Erfindung geht aus von einem Flüssigkeitsfilter nach der im Oberbegriff des Anspruchs 1 näher angegebenen Gattung.

Es ist schon ein solches Flüssigkeitsfilter aus der DE 23 28 936 B1 bekannt, dessen Gehäuse ein becherförmiges, relativ dünnwandiges, metallisches Gehäuseteil und einen zugeordneten Deckel aufweist, und das in seinem Inneren einen radial durchströmten Sterneinsatz so aufnimmt, daß er zwischen die beiden im Deckel liegenden Anschlüsse für Zulauf und Ablauf geschaltet ist. Der Sterneinsatz stützt sich dabei mit seiner oberen Stirnseite über eine zentrisch angeordnete Formdichtung am Deckel ab, während seine untere Stirnseite an einem Federelement aufliegt, das sich mit seinen vier federnden Armen an einer kegelförmigen Zone des Bodens im becherförmigen Gehäuseteil abstützt. Das Federelement ragt dabei mit einer zylindrischen, hutförmigen Ausformung dichtend in ein Mittelrohr des Filtereinsatzes hinein, wobei eine Schulter der Ausformung das Mittelrohr zentriert. Dieses Federelement baut relativ aufwendig, zumal es als Dichtelement zwischen Schmutz- und Reinseite verwendet wird. Die hutförmige Ausformung erfordert eine Vormontage des Federelements am Filtereinsatz, so daß insgesamt eine gerichtete Montage in dem Gehäuse erforderlich ist. Die vier federnden Arme greifen mit ihren abgerundeten Fußzonen in den gerundeten Übergangsbereich zwischen kegeliger Bodenzone und zylindrischem Gehäuseteil, was eine genaue Herstellung erfordert und eine Zentrierung erschwert.

Ferner ist aus der US-PS 4 844 793 eine Filtereinrichtung bekannt, bei der in einem Filterkopf eines Gehäuses eine elektrische Heizeinrichtung mit einem Drucksensor integriert ist. Bei diesem Zusatzaggregat wird eine Wellfeder verwendet, die zwischen einem Sensorgehäuse und der Heizscheibe angeordnet ist und beide Teile auseinanderdrückt. Hier stützt sich die Wellfeder an zwei ebenen Flächen ab und dient zudem auch nicht zur Halterung eines Filtereinsatzes in einem Gehäuse.

Das erfindungsgemäße Flüssigkeitsfilter mit den kennzeichnenden Merkmalen des Anspruchs 1 hat demgegenüber den Vorteil, daß es eine einfache, kostengünstige und montagefreundliche Bauweise ermöglicht. Die doppelt konvexe Wellfeder kann ohne Vormontage in ungerichteter Weise in das becherförmige Gehäuseteil eingelegt werden, was eine vollautomatisierte Herstellung begünstigt. Die spezielle Federgeometrie erreicht eine eher flächige, beschädigungslose Abstützung auf dem gewölbten Gehäuseboden, so daß der kalottenförmige Boden besonders dünnwandig ausgebildet werden kann. Die Wellfeder läßt sich in kostengünstiger Weise herstellen, wodurch ein montagefreundliches und somit kostengünstiges Gesamtkonzept des Flüssigkeitsfilters unterstützt wird.

Durch die in den Unteransprüchen aufgeführten Maßnahmen sind vorteilhafte Weiterbildungen und Verbesserungen des im Anspruch 1 angegebenen Flüssigkeitsfilters möglich. Besonders zweckmäßig ist eine Ausführung nach Anspruch 5, wenn die doppelt-konvexe Wellfeder aus flachem Bandmaterial durch Stanzen und Umformen rationell hergestellt wird. Mit dieser Ausbildung der Wellfeder läßt sich das Eingraben von Kanten in den gewölbten Gehäuseboden vermeiden. Weitere vorteilhafte Ausgestaltungen ergeben sich aus den übrigen Ansprüchen, der Beschreibung und der Zeichnung.

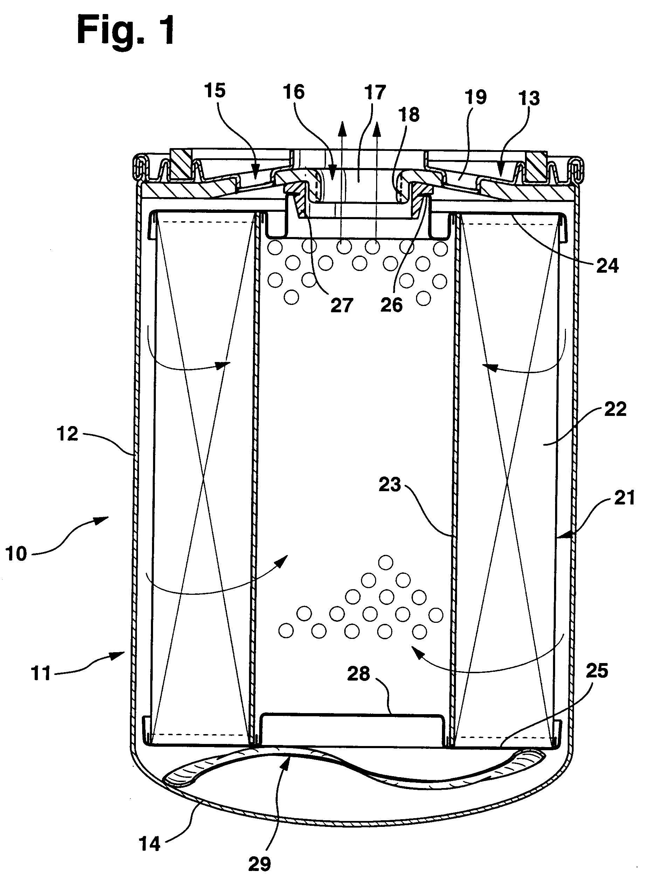

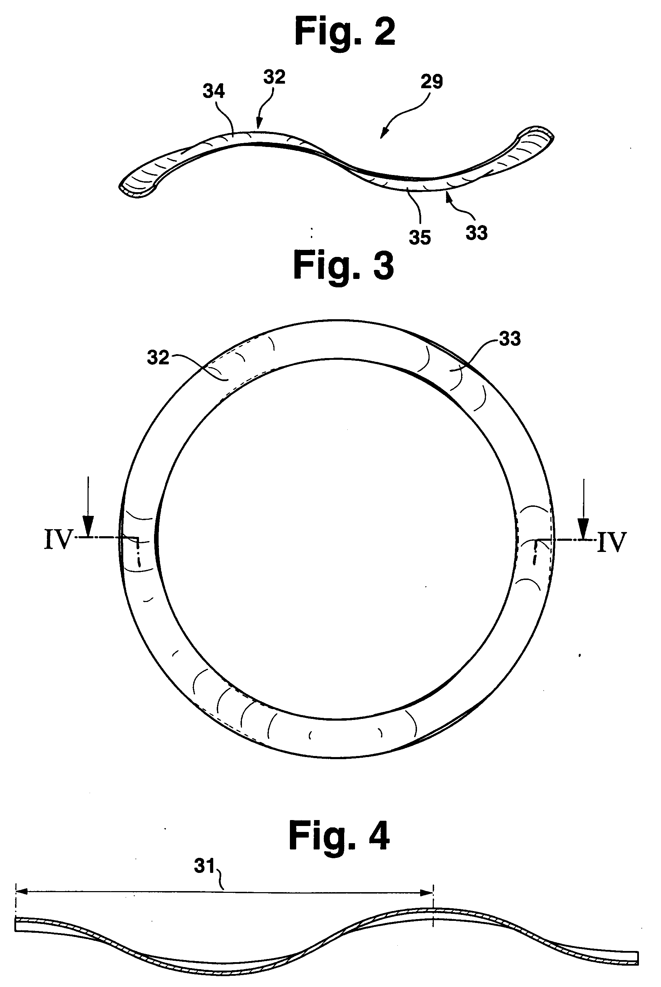

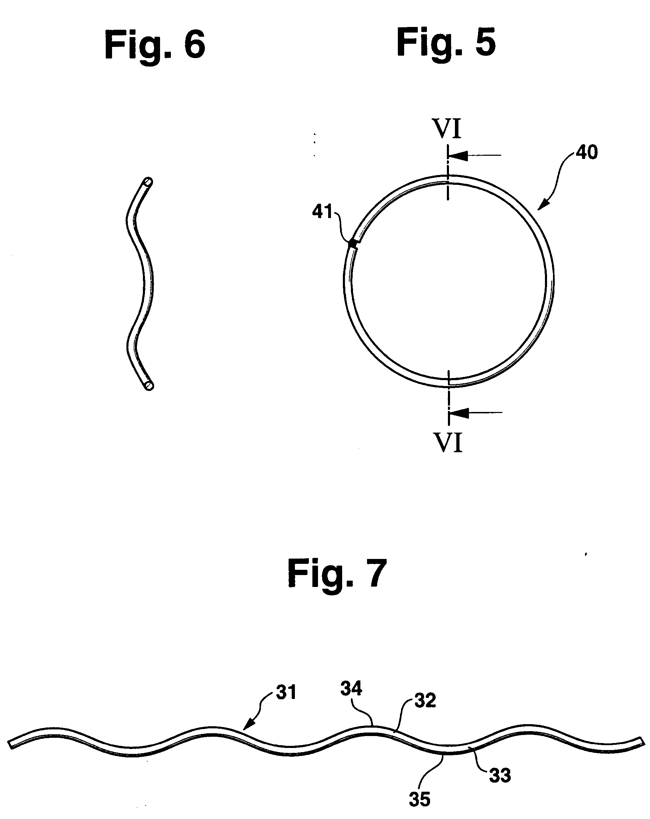

Zwei Ausführungsbeispiele der Erfindung sind in der Zeichnung dargestellt und in der nachfolgenden Beschreibung näher erläutert. Es zeigen Figur 1 einen Längsschnitt durch ein Flüssigkeitsfilter mit einer ersten Ausführungsform der Wellfeder in vereinfachter Darstellung, Figur 2 einen Längsschnitt durch die Wellfeder nach Figur 1, Figur 3 eine Draufsicht auf die Wellfeder nach Figur 2 und Figur 4 einen Schnitt nach IV-IV in Figur 3 in abgewickelter Form; Figur 5 zeigt eine Draufsicht einer zweiten Ausführungsform einer Wellfeder, Figur 6 einen Längsschnitt nach VI-VI in Figur 5 und Figur 7 eine Abwicklung der Wellfeder nach Figur 5.

Die Figur 1 zeigt einen Längsschnitt durch ein Flüssigkeitsfilter 10 in vereinfachter Darstellung, das zum Reinigen von Kraftstoff dient. Das Flüssigkeitsfilter 10 hat ein Gehäuse 11, das aus einem im wesentlichen becherförmigen Gehäuseteil 12 und einem Deckel 13 besteht, die an ihren Rändern dicht und fest miteinander verbunden, insbesondere verbördelt, sind. Das becherförmige Gehäuseteil 12, das in üblicher Weise als Tiefziehteil ausgebildet werden kann, ist als Stahlblech-Gehäuse mit einer relativ dünnen Wandstärke ausgeführt. Damit das Gehäuse 11 bei solchen dünnen Wandstärken des Gehäuseteils 12 noch eine ausreichende Druckfestigkeit gewährleistet, ist der Boden 14 des Gehäuseteils 12 kalottenförmig konkav ausgebildet. Im Deckel 13 sind in an sich bekannter Weise die Anschlüsse 15, 16 für Zulauf bzw. Rücklauf ausgebildet. Dabei wird der Rücklauf-Anschluß 16 von einer Gewindebohrung 17 gebildet, die zentrisch in einem Gewindedurchzug 18 des Deckels 13 liegt. Der Zulauf-Anschluß 15 besteht aus mehreren Öffnungen 19, die ringförmig um die Gewindebohrung 17 herum im Deckel 13 angeordnet sind.

Im Inneren des Gehäuses 11 ist ein Filtereinsatz 21 in bekannter Sternbauweise angeordnet, dessen gefaltete Filtermaterialbahn 22 hohlzylindrisch um ein gelochtes Mittelrohr 23 angeordet ist und stirnseitig durch eine obere sowie eine untere Deckscheibe abgedichtet wird. Die obere Deckscheibe 24 ist ringförmig ausgeführt und bildet mit ihrem nach innen ragenden Bund 26 eine Öffnung, in die eine Formdichtung 27 unverlierbar eingesetzt ist. Diese Formdichtung 27 hat einen im wesentlichen L-förmigen Querschnitt und besteht vorzugsweise aus Weichgummi. Die Formdichtung 27 liegt in radialer Richtung am Gewindedurchzug 18 und in axialer Richtung am Deckel 13 an, so daß die Anschlüsse für Zulauf 15 und Rücklauf 16 voneinander dicht getrennt sind.

Die untere Deckscheibe 25 ist im wesentlichen als ebene Scheibe ohne Öffnungen ausgebildet, die mit einer zentrisch angeordneten, zylindrischen Erhebung 28 in das Mittelrohr 23 ragt. An der ebenen Fläche der unteren Deckscheibe 25 einerseits und andererseits am gewölbten Boden 14 des Gehäuseteils 12 stützt sich eine speziell geformte Wellfeder 29 ab. Die Kraft dieser Wellfeder 29 wird von der unteren Deckscheibe 25 über das Mittelrohr 23 auf die obere Deckscheibe 24 übertragen, die sich ihrerseits über die Formdichtung 27 am Deckel 13 abstützt. Durch diesen Aufbau wird einerseits die Formdichtung 27 axial gegen den Stahldeckel 13 gepreßt und dichtet so die Schmutz- von der Reinseite des Flüssigkeitsfilters 10 ab, während andererseits durch die spezielle Form der Dichtung 27 auch eine radiale Dichtwirkung zwischen dieser, dem Gewindedurchzug 18 sowie der oberen Deckscheibe 24 am Filtereinsatz auftritt. Weiterhin wird durch die feste Verbindung der Formdichtung 27 mit dem Filtereinsatz 21 erreicht, daß vor dem Verschließen des Gehäuses 11 der Deckel 13 in dieser Formdichtung zentrierend aufgenommen wird und somit die Montage erheblich erleichtert.

Die Wellfeder 29 nach Figur 1 ist in Figur 2 als Einzelteil im Längsschnitt dargestellt, während die Figur 3 diese Wellfeder 29 in Draufsicht zeigt, und Figur 4 einen abgewickelten Längsschnitt nach IV-IV in Figur 3 darstellt. Aus den Figuren 2 bis 4 ist erkennbar, daß die Wellfeder 29 längs des Umfangs in drei vollen Wellen 31 verläuft, die jeweils aus einem Wellenberg 32 und einem Wellental 33 gebildet werden. Im Bereich jedes Wellenberges 32 ist eine obenliegende Fußzone 34 und im Bereich jedes Wellentales 33 eine untenliegende Fußzone 35 ausgebildet. Die Wellfeder 29 ist darüber hinaus in Radialrichtung ebenfalls derart ausgerundet, daß die Rundung an der Fußzone 34 im Wellenberg 32 nach oben und an der Fußzone 35 im Wellental nach unten zeigt, wie dies Figur 2 näher darstellt. Die Wellfeder 29 stützt sich somit mit drei konvex ausgebildeten Fußzonen 34 an der ebenen Fläche der unteren Deckscheibe 25 ab; zugleich stützt sich die Wellfeder 29 mit drei, ebenfalls konvex ausgebildeten Fußzonen 35 am kalottenförmigen Boden 14 ab. Auf diese Weise wird erreicht, daß die Wellscheibe 29 ungerichtet in das becherförmige Gehäuseteil 11 eingelegt werden kann, wobei sich immer flächenartige Berührungszonen zwischen der Wellfeder 29 und dem dünnwandigen Gehäuseteil 11 ergeben, so daß eine Beschädigung oder Eindrückung am gewölbten Boden 14 vermieden wird. Die Wellfeder 29 hat durch ihre doppelkonvexe Ausführung den Vorteil, daß sie problemlos automatisch in das Gehäuseteil 12 zugeführt werden kann und keine Vormontage in der unteren Deckscheibe 25 erfordert.

Die Wellfeder 29 ermöglicht nicht nur ein montagefreundliches und somit kostengünstiges Gesamtkonzept für den Flüssigkeitsfilter 10, sondern sie läßt sich auch kostengünstig herstellen. So kann die doppelt-konvexe Wellfeder 29 aus flachem Bandmaterial durch Stanzen und Umformen rationell und einfach hergestellt werden.

Die Figur 5 zeigt als zweites Ausführungsbeispiel eine Wellfeder 40, die sich von der Wellfeder 28 nach Figur 2 vor allem dadurch unterscheidet, daß sie aus Federdraht mit kreisförmigem Querschnitt hergestellt wird. Die beiden Enden des Federdrahts werden durch eine Schweißstelle 41 fest miteinander verbunden. Wie der Längsschnitt nach Figur 6 und die Abwicklung nach Figur 7 zeigen, weist die Wellfeder 40 vier volle Wellen 31 auf, wobei durch den runden Querschnitt des Federdrahtes ebenfalls eine ungerichtete automatische Montage der Wellfeder 40 im Gehäuseteil 12 ermöglicht wird und ebenfalls das Eingraben von Kanten in den gewölbten Gehäuseboden 14 vermieden wird.

Selbstverständlich sind an den gezeigten Ausführungsformen Änderungen möglich, ohne vom Gedanken der Erfindung abzuweichen. So kann die Wellfeder 29 auch mit mehr als drei vollen Wellen ausgebildet werden; die Rundung in radialer Richtung in den Fußzonen 34, 35 kann anstelle des gezeigten Drittel-Kreises auch größer oder kleiner ausgeführt werden, ohne auf die flächige Abstützung und die Selbstzentrierung bei der Montage verzichten zu müssen.

## Patentansprüche

1. Flüssigkeitsfilter, insbesondere für Kraftstoffe, mit einem einen Filtereinsatz aufnehmenden Gehäuse, das aus einem becherförmigen Gehäuseteil und einem Deckel besteht, in dem Anschlüsse für Zulauf und Ablauf angeordnet sind und bei dem der Filtereinsatz radial durchströmt ist und mit seiner einen Stirnseite in einer Schmutz- und Reinseite voneinander trennenden Weise am Deckel anliegt, während sich der Filtereinsatz an seiner anderen Stirnseite über ein Federelement an einem Boden des becherförmigen Gehäuseteils abstützt, wobei das Federelement mehrere am Boden anliegende Fußzonen aufweist, dadurch gekennzeichnet, daß das Federelement eine Wellfeder (29, 40) ist, bei der das ringförmig angeordnete Federmaterial in Umfangsrichtung in wenigstens drei Wellen (31) verläuft, wobei die Wellenberge (32) und die Wellentäler (33) die an dem Filtereinsatz (21) bzw. am Boden (14) anliegenden Fußzonen (34, 35) bilden und daß alle Fußzonen (34, 35) bezüglich dem ihnen gegenüberliegenden Boden (14) bzw. Filtereinsatz (21) konvex ausgebildet sind.

2. Flüssigkeitsfilter nach Anspruch 1, dadurch gekennzeichnet, daß die Fußzonen (34, 35) nach beiden Seiten hin in gleicher Weise konvex ausgebildet sind.

3. Flüssigkeitsfilter nach Anspruch 1 oder 2, dadurch gekennzeichnet, daß die Wellen (31) regelmäßig verlaufen und mit gleich großen Wellenbergen (32) und Wellentälern (33) ausgebildet sind.

4. Flüssigkeitsfilter nach einem der Ansprüche 1 bis 3, dadurch gekennzeichnet, daß das Federmaterial ein im Querschnitt kreisringförmiger Federdraht ist, dessen beide Enden fest miteinander verbunden, insbesondere verschweißt (41), sind.

5. Flüssigkeitsfilter nach einem der Ansprüche 1 bis 3, dadurch gekennzeichnet, daß das Federmaterial ein endloser Ring aus im Querschnitt rechteckförmigem Material ist, an dem durch Umformung eines scheibenförmigen Rings die konvex ausgebildeten Fußzonen (34, 35) in den Wellenbergen (32) und Wellentälern (33) angeordnet sind.

6. Flüssigkeitsfilter nach Anspruch 5, dadurch gekennzeichnet, daß die Fußzonen (34, 35) im Bereich eines Wellenberges oder Wellentales im Querschnitt die Form eines Viertel- bis Halb-Kreises aufweist.

7. Flüssigkeitsfilter nach einem der Ansprüche 1 bis 6, dadurch gekennzeichnet, daß der Boden (14) des metallischen Gehäuseteils (12) gewölbt, insbesondere kalottenförmig, ausgebildet ist.

8. Flüssigkeitsfilter nach Anspruch 7, dadurch gekennzeichnet, daß die Wellfeder (29, 40) ohne radiale Abstützung frei zwischen gewölbtem Boden (14) und einer unteren, insbesondere ebenen Deckscheibe (25) des Filtereinsatzes (21) liegt.

9. Flüssigkeitsfilter nach einem der Ansprüche 1 bis 8, dadurch gekennzeichnet, daß in der oberen Deckscheibe (24) des Filtereinsatzes (21) eine Formdichtung (27) zentrisch und unverlierbar gehaltert ist, an dem sich der Deckel (13) mit einem Gewindedurchzug (18) abstützt und dabei radial geführt wird.

## Claims

1. Liquid filter, in particular for fuels, having a housing which receives a filter insert, which comprises a cup-like housing part and a cover, in which connections for supply and discharge are arranged and in the case of which the filter insert has flow passing through it radially and, by way of one end side, butts against the cover such that it separates the contaminated side and clean side from one another, while, on its other end side, the filter insert is supported on a base of the cup-like housing part via a spring element, the spring element having a plurality of foot zones butting against the base, characterized in that the spring element is a wave-form spring (29, 40), in the case of which the annularly arranged spring material runs in at least three waves (31) in a circumferential direction, it being the case that the wave crests (32) and the wave troughs (33) form the foot zones (34, 35), which butt against the filter insert (21) and the base (14), respectively, and in that all the foot zones (34, 35) are of convex form in relation to the base (14) or filter insert (21) located opposite them.

2. Liquid filter according to Claim 1, characterized in that the foot zones (34, 35) are formed convexly in the same manner towards both sides.

3. Liquid filter according to Claim 1 or 2, characterized in that the waves (31) run in a regular manner and are formed with equally sized wave crests (32) and wave troughs (33).

4. Liquid filter according to one of Claims 1 to 3, characterized in that the spring material is a cross-sectionally annular spring wire, of which the two ends are connected fixedly, in particular welded (41), to one another.

5. Liquid filter according to one of Claims 1 to 3, characterized in that the spring material is an endless ring which is made of cross-sectionally rectangular material and on which the convexly formed foot zones (34, 35) are arranged in the wave crests (32) and wave troughs (33) by virtue of a disc-like ring being deformed.

6. Liquid filter according to Claim 5, characterized in that the foot zones (34, 35), in the region of a wave crest or wave trough, are in the form of a quarter-circle to semi-circle in cross section.

7. Liquid filter according to one of Claims 1 to 6, characterized in that the base (14) of the metallic housing part (12) is of arched, in particular dome-shaped, form.

8. Liquid filter according to Claim 7, characterized in that the wave-form spring (29, 40) is located freely, without any radial support, between the arched base (14) and a bottom, in particular planar covering disc (25) of the filter insert (21).

9. Liquid filter according to one of Claims 1 to 8, characterized in that secured in a central and captive manner in the top covering disc (24) of the filter insert (21) is a shaped seal (27) on which the cover (13) is supported, and thus guided radially, by way of a threaded through-passage (18).

## Revendications

1. Filtre à liquide, en particulier pour des carburants, avec un carter recevant une garniture de filtre, constitué d'une partie de carter en forme de godet et d'un couvercle, dans lequel sont disposés des raccordements destinés à l'amenée et l'évacuation et pour lequel la garniture de filtre est traversée par un écoulement radial et est en appui par une de ses faces frontales de manière à assurer une séparation l'un de l'autre entre le côté souillé et le côté filtré, tandis que la garniture de filtre prend appui sur son autre face frontale par l'intermédiaire d'un élément élastique sur un fond de la partie de carter en forme de godet, l'élément élastique présentant plusieurs zone de pied en appui sur le fond,
caractérisé en ce que
l'élément élastique est un ressort en zigzag (29, 40), pour lequel le matériau élastique disposé en forme d'anneau s'étend dans la direction périphérique en au moins trois ondulations (31), les sommets d'ondulation (32) et les vallées d'ondulation (33) constituant des zones de pied (34, 35) en appui sur la garniture de filtre (21) et/ou sur le fond (14), et en ce que toutes les zones de pied (34, 35) sont de réalisation convexes par rapport au fond (14) ou à la garniture de filtre (21) placés en regard.

2. Filtre à liquide selon la revendication 1,
caractérisé en ce que
les zones de pied (34, 35) sont de réalisation convexe, de même manière, vers les deux côtés.

3. Filtre à liquide selon la revendication 1 ou 2,
caractérisé en ce que
les ondulations (31) ont une allure régulière et sont réalisées avec des sommets d'ondulation (32) et des vallées d'ondulation (33) de même taille.

4. Filtre à liquide selon l'une des revendications 1 à 3,
caractérisé en ce que
le matériau élastique est un fil à ressort à section transversale en forme d'anneau de cercle, dont les deux extrémités sont reliées rigidement ensemble en particulier par soudage (41).

5. Filtre à liquide selon l'une des revendications 1 à 3,
caractérisé en ce que
le matériau élastique est un anneau continu constitué d'un matériau à section transversale de forme rectangulaire, sur lequel les zones de pied (34, 35) de réalisation convexe sont disposées dans les sommets d'ondulation (32) et les vallées d'ondulation (33), par un façonnage plastique d'un anneau en forme de disque.

6. Filtre à liquide selon la revendication 5,
caractérisé en ce que
les zones de pied (34, 35) présentent, dans la zone d'un sommet d'ondulation ou d'une vallée d'ondulation, une section transversale ayant la forme d'un quart jusqu'à un demi cercle.

7. Filtre à liquide selon l'une des revendications 1 à 6,
caractérisé en ce que
le fond (14) de la partie de carter (12) métallique est incurvé, en particulier en forme de calotte.

8. Filtre à liquide selon la revendication 7,
caractérisé en ce que
le ressort en zigzag (29, 40) est placé sans appui radial librement entre le fond incurvé (14) et un disque de couverture (25) inférieur, en particulier plan, de la garniture de filtre (21).

9. Filtre à liquide selon l'une des revendications 1 à 8,
caractérisé en ce que
dans le disque de couverture supérieure (24) de la garniture de filtre (21), prend appui, de façon centrée et imperdable, un joint d'étanchéité profilé (27) sur lequel le couvercle (13) prend appui par un passage taraudé (18) et est alors guidé radialement.
